(19) Europäisches Patentamt / European Patent Office / Office européen des brevets

(11) **EP 4 432 190 B1**

(12) **EUROPEAN PATENT SPECIFICATION**

(45) Date of publication and mention
of the grant of the patent:
**12.02.2025 Bulletin 2025/07**

(21) Application number: **24150909.0**

(22) Date of filing: **09.01.2024**

(51) International Patent Classification (IPC):
*H04L 9/32* *(2006.01)*          *G06Q 20/02* *(2012.01)*
*G06Q 20/38* *(2012.01)*          *H04L 9/00* *(2022.01)*
*G06Q 20/10* *(2012.01)*

(52) Cooperative Patent Classification (CPC):
**H04L 9/50; G06Q 20/10; G06Q 20/3825;**
**G06Q 20/3827; H04L 9/3239**

(54) **INTER-BANK TRANSACTION WITH PRIVACY ENABLED AUDITING AND PRIVACY ENABLED INTER-BANK SETTLEMENTS IN BLOCKCHAIN NETWORK**

INTERBANKTRANSAKTION MIT DATENSCHUTZAKTIVIERTEM AUDITIEREN UND DATENSCHUTZAKTIVIERTEM INTERBANK-BEGLEICHEN IN EINEM BLOCKCHAIN-NETZWERK

TRANSACTION INTERBANCAIRE AVEC VÉRIFICATION À CONFIDENTIALITÉ ET RÈGLEMENTS INTERBANCAIRES À CONFIDENTIALITÉ DANS UN RÉSEAU DE CHAÎNE DE BLOCS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.03.2023 IN 202321016945**

(43) Date of publication of application:
**18.09.2024 Bulletin 2024/38**

(73) Proprietor: **Tata Consultancy Services Limited Maharashtra (IN)**

(72) Inventors:
• **NARUMANCHI, HARIKA**
 **500081 Hyderabad (IN)**
• **MADDALI, LAKSHMI PADMAJA**
 **500001 Hyderabad (IN)**
• **EMMADI, NITESH**
 **500001 Hyderabad (IN)**

(74) Representative: **Goddar, Heinz J.**
 **Boehmert & Boehmert**
 **Anwaltspartnerschaft mbB**
 **Pettenkoferstrasse 22**
 **80336 München (DE)**

(56) References cited:
 **US-A1- 2018 025 435**

• **NARUMANCHI HARIKA ET AL: "Private and Verifiable Inter-bank Transactions and Settlements on Blockchain", 9 December 2023, INFORMATION SYSTEMS SECURITY; [LECTURE NOTES IN COMPUTER SCIENCE; LECT.NOTES COMPUTER], SPRINGER NATURE SWITZERLAND, CHAM, PAGE(S) 469 - 479, ISBN: 978-3-031-49098-9, ISSN: 0302-9743, XP047677913**
• **PRABAL BANERJEE ET AL: "Blockchain Enabled Privacy Preserving Data Audit", ARXIV.ORG, CORNELL UNIVERSITY LIBRARY, 201 OLIN LIBRARY CORNELL UNIVERSITY ITHACA, NY 14853, 28 April 2019 (2019-04-28), XP081268220**

EP 4 432 190 B1

**Description**

CROSS-REFERENCE TO RELATED APPLICATIONS AND PRIORITY

The present application claims priority to Indian application no. 202321016945, filed on March 14, 2023.

TECHNICAL FIELD

The embodiments herein generally relate to the field of blockchain networks and, more particularly, to a method and system for inter-bank transaction with privacy enabled auditing and privacy enabled inter-bank settlements in blockchain network.

BACKGROUND

Inter-bank payments on blockchain, removes the necessity of correspondent banking relationship and the associated settlement delay. Transactions between banks made on blockchain ensures better transparency, removes the need for explicit reconciliation, improves process efficiency and faster settlements in near real-time. However, current inter-bank payment systems on blockchain only handles transactions between counterparty banks, wherein a blockchain network can only validate that a bank (or a user in a bank) transacts with another bank (or another user in a bank). Essentially, the blockchain only records a part of transaction. The blockchain network does not actually verify the actual debit/credit at the sender/receiver. Furthermore, the customer account information is accessible to regulatory authorities such as Reserve Bank of India (RBI) and there is lack of privacy while performing audits. Also, current settlement is a long and tedious process and requires access to all financial transactions.

US 2018/025435 A1 relates to a blockchain-based environment comprising two or more banks and a regulatory authority such as a central bank, and teaches using private sidechains to facilitate real-time settlement resolution between banks. Transactions are verified and approved by the regulatory authority, and a corresponding record is added to the mainchain.

Technical background on the use of bilinear pairings and BLS signatures to create audit solutions on a blockchain platform is provided in PRABAL BANERJEE ET AL: "Blockchain Enabled Privacy Preserving Data Audit",ARXIV.ORG, CORNELL UNIVERSITY LIBRARY, 201 OLIN LIBRARY CORNELL UNIVERSITY ITHACA, NY 14853, 28 April 2019 (2019-04-28).

SUMMARY

Embodiments of the present disclosure present technological improvements as solutions to one or more of the above-mentioned technical problems recognized by the inventors in conventional systems.

For example, in one embodiment, a method for blockchain based auditable transactions is provided.

The method includes creating, by a blockchain network a plurality of subnetworks for bilateral transactions among a plurality of banks participating in the blockchain network via a plurality of nodes. The subnetwork comprises a first bank with a first private shared database and a second bank with a second private shared database, and a common private shared database among the first bank, the second bank and a governing authority present within the blockchain network. A bilateral transaction comprises at least one of: (a) an inter-bank transaction between a first customer of the first bank and a second customer of the second bank with privacy enabled auditing by the governing authority through the blockchain network, and (b) privacy enabled inter-bank settlements between the first bank and the second bank.

Further the method includes detecting, by the subnetwork, at least one of: (a) initiation of a transaction request to transfer funds or payment from the first customer of the first bank with the second customer of the second bank and (b) an inter-bank settlement request between the first bank and the second bank. Further the method includes performing, by the subnetwork, the inter-bank transaction with privacy enabled auditing by the governing authority on detecting the initiation of the transaction request, wherein performing the inter-bank transaction comprising: (i) receiving a record of payment for the inter-bank transaction from the first customer of the first bank to the second customer of the second bank; (ii) recording transaction details by the first bank for the first customer and the second bank for the second customer with a transaction timestamp by creating signatures for a current and an updated balance of the first customer and the second customer based on a transaction amount, wherein the updated balance is stored in the first private shared database of the first bank for the first customer and in the second private shared database of the second bank for the second customer, and wherein the signatures are created using pairing based cryptographic algorithms; (iii) storing hashes and signatures of the current and the updated balance by the first bank for the first customer and the second bank for the second customer on a global ledger of the blockchain network, wherein the global ledger is accessible to the first bank, the second bank and the governing authority; (iv) creating (a) a proof of transaction by the first bank, by subtracting the updated balance from current balance of the first customer, and (b) the proof of transaction by the second bank by subtracting the current balance from the updated balance for the second customer; and (v) receiving the proof of transaction from the first bank and the second bank by the governing authority to verify correctness of the inter-bank transaction by comparing the received proof of transaction with the stored hashes, and signatures of the balances on the global ledger.

Further, the method includes performing, by the subnetwork, the privacy enabled inter-bank settlements through the blockchain network on detecting the inter-bank settlement request between the first bank and the second bank comprising: (i) independently computing a sum of all credits transaction and debits transaction for end of predefined settlement cycle by the first bank and the second bank; (ii) creating, the signatures for a proof of settlement by the first bank for verification by the second bank and the signatures for the proof of settlement by the second bank for verification by the first bank; (iii) verifying mutually by the first bank and the second bank, banks settlement using debits and credits against the proof of settlement received from each other; (iv) storing settlement details along with the proof of settlement on the common private shared database, accessible to the governing authority; and(v) storing transaction on the global ledger for verifying by the governing authority.

In another aspect, a system for blockchain based auditable transactions is provided. The system comprises a memory storing instructions; one or more Input/Output (I/O) interfaces; and one or more hardware processors coupled to the memory via the one or more I/O interfaces, wherein the one or more hardware processors are configured by the instructions to create, by a blockchain network a plurality of subnetworks for bilateral transactions among a plurality of banks participating in the blockchain network via a plurality of nodes. The subnetwork comprises a first bank with a first private shared database and a second bank with a second private shared database, and a common private shared database among the first bank, the second bank and a governing authority present within the blockchain network. A bilateral transaction comprises at least one of: (a) an inter-bank transaction between a first customer of the first bank and a second customer of the second bank with privacy enabled auditing by the governing authority through the blockchain network, and (b) privacy enabled inter-bank settlements between the first bank and the second bank.

Further the subnetwork detects at least one of: (a) initiation of a transaction request to transfer funds or payment from the first customer of the first bank with the second customer of the second bank and (b) an inter-bank settlement request between the first bank and the second bank. Further the subnetwork performs the inter-bank transaction with privacy enabled auditing by the governing authority on detecting the initiation of the transaction request, wherein performing the inter-bank transaction comprising: (i) receiving a record of payment for the inter-bank transaction from the first customer of the first bank to the second customer of the second bank; (ii) recording transaction details by the first bank for the first customer and the second bank for the second customer with a transaction timestamp by creating signatures for a current and an updated balance of the first customer and the second customer based on a transaction amount, wherein the updated balance is stored in the first private shared database of the first bank for the first customer and in the second private shared database of the second bank for the second customer, and wherein the signatures are created using pairing based cryptographic algorithms; (iii) storing hashes and signatures of the current and the updated balance by the first bank for the first customer and the second bank for the second customer on a global ledger of the blockchain network, wherein the global ledger is accessible to the first bank, the second bank and the governing authority; (iv) creating (a) a proof of transaction by the first bank, by subtracting the updated balance from current balance of the first customer, and (b) the proof of transaction by the second bank by subtracting the current balance from the updated balance for the second customer; and (v) receiving the proof of transaction from the first bank and the second bank by the governing authority to verify correctness of the inter-bank transaction by comparing the received proof of transaction with the stored hashes, and signatures of the balances on the global ledger.

Further, the subnetwork performs the privacy enabled inter-bank settlements through the blockchain network on detecting the inter-bank settlement request between the first bank and the second bank, the steps comprising: (i) independently computing a sum of all credits transaction and debits transaction for end of predefined settlement cycle by the first bank and the second bank; (ii) creating, the signatures for a proof of settlement by the first bank for verification by the second bank and the signatures for the proof of settlement by the second bank for verification by the first bank; (iii) verifying mutually by the first bank and the second bank, banks settlement using debits and credits against the proof of settlement received from each other; (iv) storing settlement details along with the proof of settlement on the common private shared database, accessible to the governing authority; and (v) storing transaction on the global ledger for verifying by the governing authority.

In yet another aspect, there are provided one or more non-transitory machine-readable information storage mediums comprising one or more instructions, which when executed by one or more hardware processors causes a method for blockchain based auditable transactions. The method includes creating, by a blockchain network a plurality of subnetworks for bilateral transactions among a plurality of banks participating in the blockchain network via a plurality of nodes. The subnetwork comprises a first bank with a first private shared database and a second bank with a second private shared database, and a common private shared database among the first bank, the second bank and a governing authority present within the blockchain network. A bilateral transaction comprises at least one of: (a) an inter-bank transaction between a first customer of the first bank and a second customer of the second bank with privacy enabled auditing by the governing authority through the blockchain network, and (b) privacy enabled inter-bank settlements between the first bank and the second bank.

Further the method includes detecting, by the subnetwork, at least one of: (a) initiation of a transaction request to transfer funds or payment from the first customer of the first bank with the second customer of the second bank and (b) an inter-bank settlement request between the first bank and the second bank. Further the method includes performing, by the subnetwork, the inter-bank transaction with privacy enabled auditing by the governing authority on detecting the initiation of the transaction request, wherein performing the inter-bank transaction comprising: (i) receiving a record of payment for the inter-bank transaction from the first customer of the first bank to the second customer of the second bank; (ii) recording transaction details by the first bank for the first customer and the second bank for the second customer with a transaction timestamp by creating signatures for a current and an updated balance of the first customer and the second customer based on a transaction amount, wherein the updated balance is stored in the first private shared database of the first bank for the first customer and in the second private shared database of the second bank for the second customer, and wherein the signatures are created using pairing based cryptographic algorithms; (iii) storing hashes and signatures of the current and the updated balance by the first bank for the first customer and the second bank for the second customer on a global ledger of the blockchain network, wherein the global ledger is accessible to the first bank, the second bank and the governing authority; (iv) creating (a) a proof of transaction by the first bank, by subtracting the updated balance from current balance of the first customer, and (b) the proof of transaction by the second bank by subtracting the current balance from the updated balance for the second customer; and (v) receiving the proof of transaction from the first bank and the second bank by the governing authority to verify correctness of the inter-bank transaction by comparing the received proof of transaction with the stored hashes, and signatures of the balances on the global ledger.

Further, the method includes performing, by the subnetwork, the privacy enabled inter-bank settlements through the blockchain network on detecting the inter-bank settlement request between the first bank and the second bank comprising: (i) independently computing a sum of all credits transaction and debits transaction for end of predefined settlement cycle by the first bank and the second bank; (ii) creating, the signatures for a proof of settlement by the first bank for verification by the second bank and the signatures for the proof of settlement by the second bank for verification by the first bank; (iii) verifying mutually by the first bank and the second bank, banks settlement using debits and credits against the proof of settlement received from each other; (iv) storing settlement details along with the proof of settlement on the common private shared database, accessible to the governing authority; and(v) storing transaction on the global ledger for verifying by the governing authority.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for an inter-bank transaction with privacy enabled auditing and a privacy enabled inter-bank settlements in blockchain network, in accordance with some embodiments of the present disclosure.

FIG. 1B depicts a technical problem to be addressed for the inter-bank transaction between two banks of the blockchain network.

FIG. 1C illustrates architecture of a blockchain network implementing the system of FIG. 1A for the inter-bank transaction with privacy enabled auditing and the privacy enabled inter-bank settlements, in accordance with some embodiments of the present disclosure.

FIG. 2 is a flow diagram illustrating a method for the inter-bank transaction with privacy enabled auditing and the privacy enabled inter-bank settlements, using the system of FIG. 1A, in accordance with some embodiments of the present disclosure.

FIG. 3 depicts individual private shared databases created for each bank in the subnetwork and a common private shared database accessible to each bank in the subnetwork and the governing authority, in accordance with some embodiments of the present disclosure.

FIG. 4A depicts authenticator or signature generation and FIG. 4B depicts proof generation and verification during the inter-bank transaction with privacy enabled auditing, in accordance with some embodiments of the present disclosure.

FIG. 5 depicts the privacy enabled inter-bank settlements, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Currently the blockchain based inter-bank payment systems handle transactions between counterparty banks. The limitation of the current system is that a blockchain network records only a part of transaction that is it can only validate that a bank (or a user in a bank) transacts with another bank (or another user in a bank). The network does not actually verify the actual debit/credit to the sender/receiver. Also, during audit, the customer account information should be shared with regulatory authorities for verifying the transaction and this will lead to lack of privacy. Current solutions in literature use Zero Knowledge Proofs (ZKP) to ensure cryptographic guarantees for account balances. These are highly complex and require large memory. Hence there is a need for a computationally efficient mechanism which will preserve the privacy of customer financial information and provides verifiable cryptographic guarantees for debits and credits of a transaction without revealing customer information.

Embodiments of the present disclosure provide a method and system for an inter-bank transaction with privacy enabled auditing and a privacy enabled inter-bank settlements in blockchain network. The method disclosed leverages cryptographic primitives such as Boneh-Lynn-Shacham (BLS) that uses Bilinear Pairings for verification, to preserve the privacy of the customer's financial information and to enable faster auditable settlement between the banks in the presence of a governing body.

BLS is a well-known signature scheme. However, it is mostly used in the current literature, for some auditing solutions based on bilinear pairings. These solutions are designed in the context of provable data possession to audit if a file is stored intact or not. However, these are not designed in the context of transaction auditing and settlement in financial systems. The primitives used by the method disclosed herein is a modified version of provable data possession (PDP) which was used for proving whether an outsourced file is intact or not. The method disclosed leverages this primitive to privately audit and monitor ever changing states of financial attributes (user account balances), unlike the application of BLS in the literature and existing methods.

Furthermore, BLS and ZKP are two different approaches to solve the problem of proving correctness of underlying data without revealing it. However, as well known in the domain ZKP used in the existing solutions, is much more complex, memory consuming and is computationally intensive. The cryptographic primitives (BLS) used in by the method disclosed provides relatively fast prover times and requires less memory to compute the proof. BLS signatures are faster, efficient and produces one of the shortest signatures when compared to ZKP.

One of the existing approaches addressing auditable transaction problem, during audit, requires all banks (nodes) to privately or individually construct checkpoints with all transactions in which it has involved, and this represents their local state. To build the global state, all the nodes coordinate their local states which is time consuming. However, in the method disclosed herein, during transaction processing, both banks create verifiable proofs of both credit and debit of their customers' balances for a transaction without revealing the actual balances to the counterparties. The auditing party (governing authority) can verify the proofs received from both banks against the data (authenticators/signatures, hashes) stored on blockchain. Thus, the method disclosed eliminates the process of coordinating local states to build global state, hence reduces the communication overhead. Blockchain is updated with the current transaction status when the transaction process is completed.

Another work in literature addresses the technical problem blockchain based inter-bank settlements through incremental updates and multiple blockchains. The existing system maintains three different blockchains, one for storing the current balances and others for storing credit and debit balances. Here, there is no integrity proofs for credits and debits of a transaction. The credits on the second blockchain are consolidated onto corresponding debits on the third blockchain. This kind of solution in the art is only robust if there are any (verifiable) guarantees provided for bindings from second blockchain to third blockchain. The existing work does not provide any provable guarantees for settlement amounts i.e., proof for consolidated credits and debits of banks.

Unlike the existing approaches above, the method and system disclosed here is modelled on a single blockchain, which guarantees that credits and debits are atomic on the same blockchain. In the prior art, privacy of customer information (Payee identifier, Payer identifier and debit/credit amount) is not considered. Modelled on a single blockchain, the system provides verifiable cryptographic guarantees for privacy preserving debits and credits of a transaction without revealing customer information. Customer information is available only to the registered banks and to verifying parties (governing authorities) on need basis.

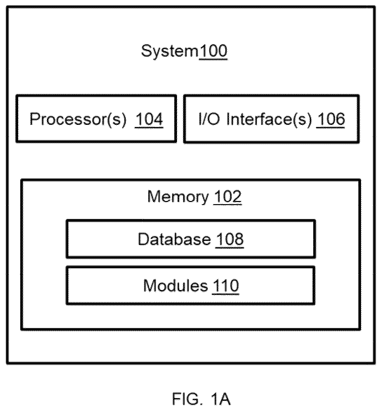

Referring now to the drawings, and more particularly to FIGS. 1A through 5, where similar reference characters denote corresponding features consistently throughout the figures, there are shown preferred embodiments and these embodiments are described in the context of the following exemplary system and/or method.

FIG. 1A is a functional block diagram of a system 100 for an inter-bank transaction with privacy enabled auditing and a privacy enabled inter-bank settlements in blockchain network, in accordance with some embodiments of the present disclosure. The system 100 herein is the blockchain network with distributed computing across plurality of nodes of the blockchain. The blockchain includes a plurality of subnetworks for bilateral transactions among a plurality of banks participating in the blockchain network via the plurality of nodes.

In an embodiment, the system 100 includes one or more hardware processors 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices such as the nodes within the blockchain network.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110. The plurality of modules 110 include programs or coded instructions that supplement applications or functions performed by the system 100 for executing different steps involved in the process of the inter-bank transaction with privacy enabled auditing and the privacy enabled inter-bank settlements performed by the blockchain network or the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown). Further, the memory 102 may comprise information pertaining to input(s)/output(s) of each step performed by the processor(s) 104 of the system 100 and methods of the present disclosure.

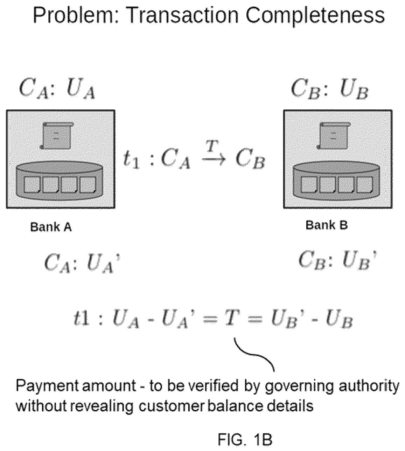

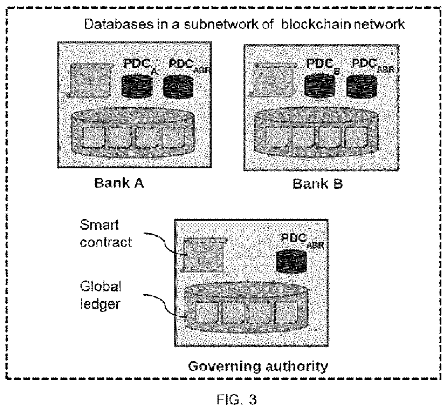

Further, the memory 102 includes a database 108 comprising individual private shared databases created for each bank in the subnetwork and a common private shared database accessible to each bank in the subnetwork and a governing authority as explain later in FIG. 3. The database (or repository) 108 may include a plurality of abstracted piece of code for refinement and data that is processed, received, or generated as a result of the execution of the plurality of modules in the module(s) 110. Although the data base 108 is shown internal to the system 100, it will be noted that, in alternate embodiments, the database 108 can also be implemented external to the system 100, and communicatively coupled to the system 100. The data contained within such external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagrams in FIG. 1B through FIG. 5.

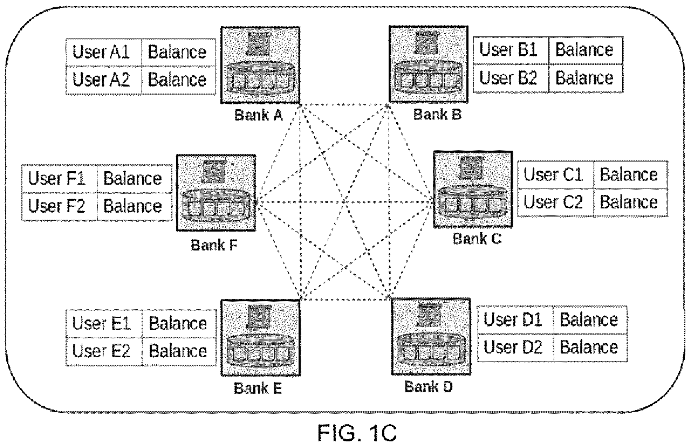

FIG. 1B depicts a problem to be addressed for the inter-bank transaction between two banks of the blockchain network. For a transaction between two customers, a first customer ($C_A$) of a first bank (Bank A) and a second customer ($C_B$) of a second bank (Bank B). Here, $C_A$ of Bank A initiates a transaction to transfer funds or payment to $C_B$ of Bank B, once the transaction is validated by the nodes, the blockchain network records the transaction $t_1$ on a global ledger in the blockchain network. However, the blockchain network cannot guarantee that the Bank A debited the account of customer $C_A$ by amount T and Bank B credited to $C_B$ account as their respective balances $U_A$ and $U_B$ are private to banks and should not be revealed ideally to even the governing authorities like Reserve Bank of India (RBI). However, customer balances are shared to the governing authorities on need basis. This technical problem in inter-bank transactions for payments is addressed by creating subnetworks as explained in FIG. 1C with multiple types shared databases as explained in FIG.3.

FIG. 1C illustrates architecture of the blockchain network implementing the system of FIG. 1A for the inter-bank transaction with privacy enabled auditing and the privacy enabled inter-bank settlements, in accordance with some embodiments of the present disclosure. The blockchain network comprises a plurality of subnetworks for bilateral transactions among the plurality of banks participating in the blockchain network via the plurality of nodes. For example, Bank A, Bank B, Bank C, Bank D, Bank E and Bank F, also referred to as entities, are part of the blockchain network. Each bank has bank accounts of multiple users or customers with confidentiality to be maintained about amount or balance or any other customer information in a bank while transactions are being performed or validated or verified for credit/debit by the governing authority like Bank of Banks such as RBI.

The subnetwork comprises a pair of banks, for example, a pair of the first bank (interchangeably referred herein after as Bank A) and the second bank (interchangeably referred herein after as Bank B). As depicted in FIG. 3, the subnetwork comprises (a) a first private shared database ($PDC_A$), for the first bank, (b) a second private shared database ($PDC_B$) for the second bank, and (c) a common private shared database ($PDC_{ABR}$), among the first bank, the second bank and the governing authority, which is also an entity in the blockchain network. Private shared databases are created in order to store transaction data, account information of customers specific to a bank. If the customer information is not stored privately, then the private data will be accessible from global ledger to all the entities in the blockchain network. Private shared databases ensure privacy of transaction data and customer information from other entities such as banks. The governing authority, for example, can be a bank of banks such as RBI. The bilateral transaction comprises at least one of: (a) an inter-bank transaction between the first customer $C_A$ of the first bank (Bank A) and the second customer $C_B$ of the second bank (Bank B) of the pair of banks with privacy enabled auditing by the governing authority through the blockchain network, and (b) a privacy enabled inter-bank settlements between the first bank and the second bank.

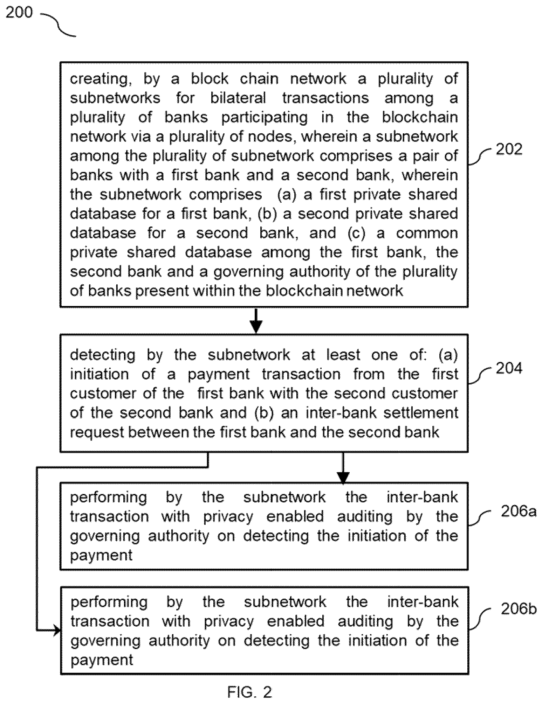

FIG. 2 is a flow diagram illustrating a method 200 for the inter-bank transaction with privacy enabled auditing and the privacy enabled inter-bank settlements, using the system of FIG. 1A, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to the steps of the method 200, at step 202, the blockchain network executed by the one or more hardware processors 104 create the plurality of subnetworks for bilateral transactions among the plurality of banks participating in the blockchain network via the plurality of nodes as depicted in FIG. 1B. As discussed above, the subnetwork among the plurality of subnetwork comprises a pair of banks with the first bank (interchangeably referred herein after as Bank A) and the second bank (interchangeably referred herein after as Bank B). The subnetwork comprises (a) a first private shared database ($PDC_A$), for the first bank, (b) a second private shared database ($PDC_B$) for the second bank, and (c) a common private shared database ($PDC_{ABR}$), among the first bank, the second bank and the governing authority present within the blockchain network. The governing authority, for example can be a bank of banks such as RBI. The bilateral transaction comprises at least one of: (a) an inter-bank transaction between a first customer of a first bank and a second customer of a second bank of the pair of banks with privacy enabled auditing by the governing authority through the blockchain network, and (b) a privacy enabled inter-bank settlements between the first bank and the second bank.

At step 204 of the method 200, the subnetwork executed by the one or more hardware processors 104 detects at least one of: (a) initiation of a transaction request to transfer funds or payment from the first customer of the first bank with the second customer of the second bank and (b) an inter-bank settlement request between the first bank and the second bank. The event associated with detection of initiation of the transaction request for fund transfer or payment or interbank settlement can be tapped at the User Interface of the user or the bank.

Upon detecting the initiation of the transaction request, at step 206a of the method 200, the subnetwork executed by the one or more hardware processors 104 performs the inter-bank transaction with privacy enabled auditing by the governing authority. Similarly on detecting the inter-bank settlement request between the first bank and the second bank, at step 206b of the method 200, the privacy enabled inter-bank settlements through the blockchain network is performed.

Performing the inter-bank transaction comprises sub steps i) to v) as below:

i) Receiving, a record of transaction request for fund transfer or payment between the entities, i.e., for the inter-bank transaction from the first customer of the first bank to the second customer of the second bank. Each of these entities (such as Bank A and Bank B) owns BLS public and private key pair (*pk, sk*) and are enlisted to the blockchain. Each of the entities creates a public key $v = g^{\alpha}$, and keeps $\alpha$ as secret. An entity's public and private key pair is (*pk, sk*) = (*v*, $\alpha$). Public key *pk* of an entity is stored on blockchain. This key pair is used by the entities to generate signatures referred interchangeably as authenticator. Authenticator is a credential BLS signature. All the entities are onboarded to a single channel in blockchain platform. The method disclosed here can be implemented on any permissioned blockchain platform. As well known in the art, the BLS is a digital signature scheme with aggregation properties. Given set of signatures (signature_1,..., signature_n) anyone can produce an aggregated signature. Aggregation can also be done on secret keys and public keys.

The BLS key generation approach is explained below.

Let $e : G \times G \to G_T$ be a bilinear map, where $G$, $G_T$ are groups of prime order $r_p$. Suppose $H : \{0,1\}^* \to G$ is a BLS hash function. The key generation algorithm randomly selects private key, $\alpha \xleftarrow{R} \mathbb{Z}_p$ such that $0 < r_p$, and $u_A$, $u_B$ is chosen uniformly at random from $G$. Let $g$ be the generator of $G$. Public key $v$ is calculated as $v = g^{\alpha}$. The method disclosed uses type A pairing with group order 160-bits and order of base field is 512-bits and pairings are constructed on the curve $y^2 = x^3 + x$ over the field $F_q$ for some prime $q = 3 \bmod 4$. Public and private key pair is (*pk, sk*) = (*v*, $\alpha$).

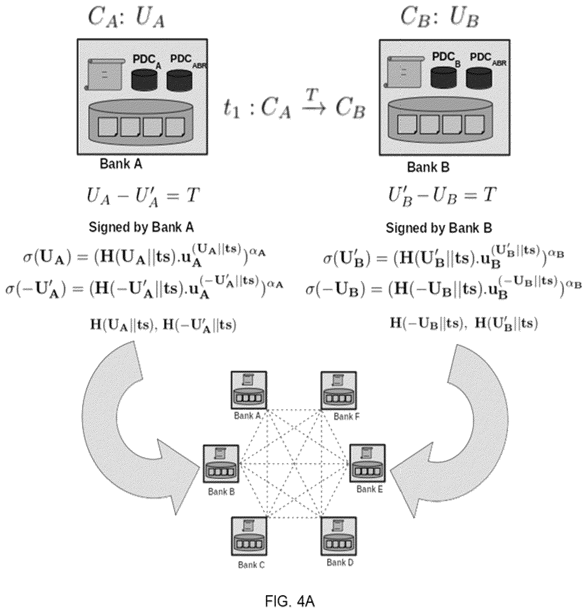

ii) Individually recording transaction details by the first bank for the first customer and the second bank for the second customer with a transaction timestamp by creating signatures or authenticators for a current and an updated balance of the first customer ($C_A$) and the second customer ($C_B$) based on a transaction amount as depicted in FIG. 4A. The updated balance is stored in the first private shared database (PDC$_A$) of the first bank (Bank A) for the first customer. Similarly, in the second private shared database (PDC$_B$) of the second bank (Bank B) for the second customer ($C_B$). The signatures or authenticators are created using pairing based cryptographic algorithm such as BLS as mentioned in art.

iii) Storing hashes and signatures or authenticators of the current and the updated balance by the first bank for the first customer and the second bank for the second customer on a global ledger of the blockchain network. The global ledger as depicted in FIG.3 is accessible to the first bank, the second bank and the governing authority.

iv) Creating (a) a proof of transaction by the first bank, by subtracting the updated balance from current balance of the first customer ($U_A - U'_A = T$), and (b) the proof of transaction by the second bank by subtracting the current balance from the updated balance for the second customer ($U'_B - U_B = T$).

v) Receiving the proof of transaction from the first bank and the second bank by the governing authority to verify correctness of the inter-bank transaction by comparing the received proof of transaction with the stored hashes, and signatures or authenticators of the balances on the global ledger.

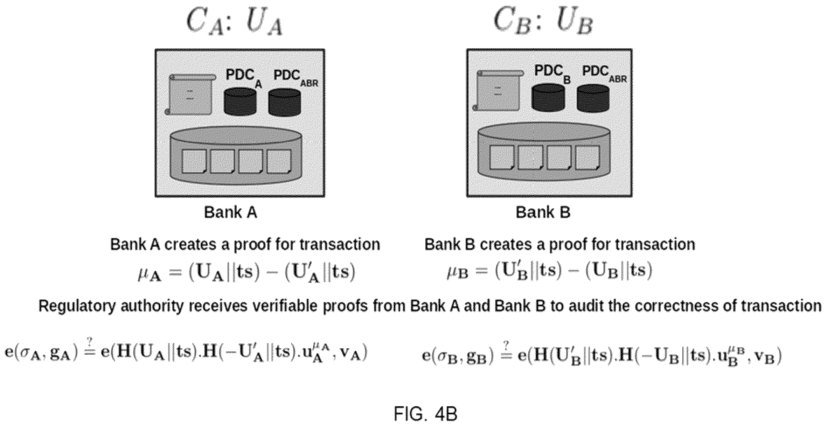

The sub steps i) to v) for step 206a are explained below with an example with reference to FIG.3, FIG. 4A and FIG. 4B.

Scenario: Entities of the system 100 (blockchain network) with reference to FIG. 1C, i.e., say the customer ($C_A$) of Bank A wishes to transfer an amount of to the customer ($C_B$) of Bank B. $C_A$ initiates a transaction to transfer funds to $C_B$.

$$t1 : \ C_A \xrightarrow{T} C_B$$

The signatures/authenticators generation for payment transaction is as depicted in FIG. 4A.

Bank A side: This transaction is validated by nodes of Bank A, deducts T from current balance $U_A$ of $C_A$ and stores the new balance U'$_A$ (also referred to as $U'_A$) in PDC$_A$.

$$U_A - T \ = \ U'_A$$

$C_A$ creates a signature for its current balance $U_A$ and updated balance $U'_A$ with transaction timestamp *ts* as in equation 1 and equation 2 below, wherein these signatures $\sigma(U_A)$, $\sigma(-U'_A)$ and hashes $H(U_A, \|ts)$, $H(U'_A\|ts)$ are stored on the blockchain.

$$\sigma(U_A) \ = \ \left(H(U_A\|ts).u_A^{U_A\|ts}\right)^{\alpha_A}, where \ u_A \xleftarrow{R} G \qquad \text{equation 1}$$

$$\sigma\left(-U'_A\right) = \left(H\left(-U'_A \,||ts\right).u_A^{-U'_A\,||ts}\right)^{\alpha_A}, where\ u_A \xleftarrow{R} G \quad \text{equation 2}$$

Bank B side: This transaction is also validated by Bank B, adds T to the current balance $U_B$ of customer ($C_B$) of Bank B and stores the updated balance $U'_B$, also referred as $U'_B$, in $PDC_B$, wherein $U_B + T = U'_B$. $C_B$ creates a signature for its current balance $U_B$ and updated balance $U'_B$ with transaction timestamp $ts$ as in equation 3 and equation 4, these signatures $\sigma(U_B)$, $\sigma(-U'_B)$ and hashes $H(U_B,||ts)$, $H(U'_B,||ts)$ are stored on the blockchain. Timestamp $ts$ is stored on private data collection of $PDC_A$ and $PDC_B$.

$$\sigma(U'_B) = \left(H(U'_B||ts).u_B^{U'_B||ts}\right)^{\alpha_B}, where\ u_B \xleftarrow{R} G \quad\quad \text{equation 3}$$

$$\sigma\left(-U_B\right) = \left(H\left(-U_B\,||ts\right).u_B^{-U_B\,||ts}\right)^{\alpha_B}, where\ u_B \xleftarrow{R} G \quad\quad \text{equation 4}$$

Proof Generation: Bank A creates a proof for transaction $t_1$ i.e., $U_A - U'_A = T$ for customer $C_A$ as in equation 5 below.

$$\mu_A = (U_A\,||ts) - (U'_A\,||ts)\ (5)$$

Similarly, Bank B creates a proof for transaction $t_1$ i.e., $U'_B - U_B = T$ for customer $C_B$ as in equation 6 below.

$$\mu_B = (U'_B||ts) - (U_B\,||ts) \quad\quad \text{equation 6}$$

Transaction Audit: As part of auditing process, regulatory authority such as RBI receives verifiable proof ( $u_A^{\mu_A}, u_B^{\mu_B}$ ) from Bank A and Bank B to audit the correctness of transaction, say $t_1$. The correctness of the transaction is verified by equation 7 and equation 8 below:

$$e(\sigma_A, g_A) \overset{?}{=} e(H(U_A\,||ts).H\left(-U'_A\,||ts\right).u_A^{\mu_A}, v_A) \quad\quad \text{equation 7}$$

$$e(\sigma_B, g_B) \overset{?}{=} e\left(H(U'_B\,||ts).H\left(-U_B\,||ts\right).u_B^{\mu_B}, v_B\right) \quad\quad \text{equation 8}$$

Here, $\sigma_A$ and $\sigma_B$ in L.H.S are computed from $\sigma(U_A)$, $\sigma(-U'_A)$ and $\sigma(U_B)$, $\sigma(-U'_B)$ retrieved from the blockchain or blockchain network (system 100), which acts as global immutable proof as provided in equation 9 and equation 10 below:

$$\sigma_A = \sigma(U_A).\sigma(-U'_A) \quad\quad \text{equation 9}$$

$$\sigma_B = \sigma(U_B).\sigma(-U'_B) \quad\quad \text{equation 10}$$

The verification result is either success or failure. If the verification is success it guarantees the correctness of transaction. If the verification is failure, disputes have to be settled between the counter- party banks.

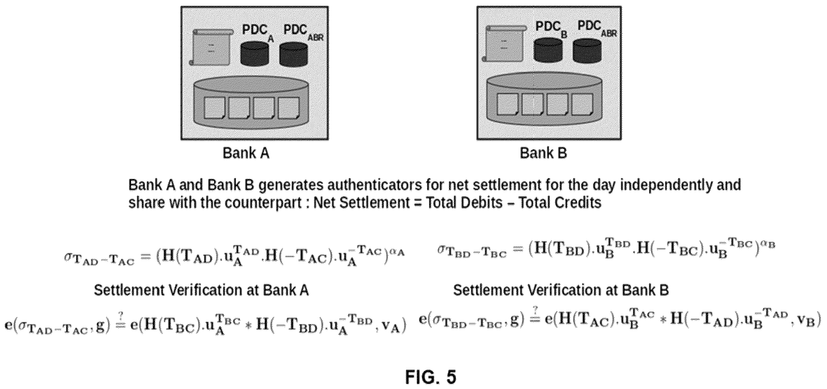

The privacy enabled inter-bank settlements through the blockchain network at step 206b is depicted in FIG. 5. The step 206b on detecting the inter-bank settlement request between the first bank and the second bank, comprises steps of:

i) Independently computing a sum of all credits transaction ($T_{AC}$ and $T_{BC}$) and debits transaction ($T_{AD}$ and $T_{BD}$) for end of predefined settlement cycle by the first bank and the second bank.

ii) Creating, the signatures or authenticators ($\sigma_{T_{AD}-T_{AC}}$) for a proof of settlement by the first bank for verification by the second bank and the signatures or authenticators ($\sigma_{T_{BD}-T_{BC}}$) for the proof of settlement by the second bank for verification by the first bank. The signatures/authenticator generation is performed using well known BLS signature technique as explained in step 206a above.

iii) Verifying mutually by the first bank and the second bank, banks settlement using debits and credits against the proof of settlement received from each other.

iv) Storing settlement details along with the proof of settlement on the common private shared database, accessible to the governing authority.

v) Storing transaction on the global ledger for verifying by the governing authority.

The sub steps i) to v) for step 206b are explained below with an example with reference to FIG.3 and FIG. 5.

At the end of settlement cycle, the banks consolidate all credits and debits independently. Sum of debits and credits of each bank is denoted as follows:

$T_{AD}$ : Sum of all debits at Bank A
$T_{AC}$ : Sum of all credits at Bank A
$T_{BD}$ : Sum of all debits at Bank B
$T_{BC}$ : Sum of all credits at Bank B

Banks A create authenticators for the settlement amount and share with Bank B.

$$\sigma_{T_{AD}-T_{AC}} = \left( H(T_{AD}) \cdot u_A^{T_{AD}} \cdot H(-T_{AC}) \cdot u_A^{-T_{AC}} \right)^{\alpha_A} \qquad \text{equation 11}$$

Bank B verifies the settlement using their debits and credits against the proof received from Bank A.

$$e\left(\sigma_{T_{AD}-T_{AC}}, g\right) \overset{?}{=} e\left( H(T_{BC}) \cdot u_A^{T_{BC}} * H(-T_{BD}) \cdot u_A^{-T_{BD}}, v_A \right) \qquad \text{equation 12}$$

Banks B create authenticators for the settlement amount and share with Bank A.

$$\sigma_{T_{BD}-T_{BC}} = \left( H(T_{BD}) \cdot u_B^{T_{BD}} \cdot H(-T_{BC}) \cdot u_B^{-T_{BC}} \right)^{\alpha_B} \qquad \text{equation 13}$$

Bank A verifies the settlement using their debits and credits against the proof received from Bank B.

$$e\left(\sigma_{T_{BD}-T_{BC}}, g\right) \overset{?}{=} e\left( H(T_{AC}) \cdot u_B^{T_{AC}} * H(-T_{AD}) \cdot u_B^{-T_{AD}}, v_B \right) \qquad \text{equation 14}$$

The settlement along with the proofs are stored on the private database shared with governing authority and this transaction is stored on blockchain.

Thus, the method disclosed provides blockchain platform the inter-bank transaction with privacy enabled auditing and the privacy enabled inter-bank settlements. The method disclosed leverages cryptographic primitives such as BLS to preserve the privacy of the customer's financial information and to enable faster auditable settlement between the banks in the presence of a governing body. Thus, method provides a computationally efficient mechanism that can preserve the privacy of customer financial information and provides verifiable cryptographic guarantees for debits and credits of a transaction without revealing customer information.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components.

For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200)comprising:

   creating (202), by a blockchain network executed by one or more hardware processors, a plurality of subnetworks for bilateral transactions among a plurality of banks participating in the blockchain network via a plurality of nodes, wherein a subnetwork among the plurality of subnetwork comprises a first bank with a first private shared database and a second bank with a second private shared database, and a common private shared database among the first bank, the second bank and a governing authority present within the blockchain network, and wherein a bilateral transaction comprises at least one of: (a) an inter-bank transaction between a first customer of the first bank and a second customer of the second bank with privacy enabled auditing by the governing authority through the blockchain network, and (b) privacy enabled inter-bank settlements between the first bank and the second bank;

   detecting (204), by the subnetwork executed by the one or more hardware processors, at least one of (a) initiation of a transaction request to transfer funds or payment from the first customer of the first bank with the second customer of the second bank and (b) an inter-bank settlement request between the first bank and the second bank; and

   performing (206a), by the subnetwork executed by the one or more hardware processors, the inter-bank transaction with privacy enabled auditing by the governing authority on detecting the initiation of the transaction request, wherein performing the inter-bank transaction comprises:

   i) receiving a record of the transaction request to transfer funds or payment for the inter-bank transaction from the first customer of the first bank to the second customer of the second bank;
   ii) recording transaction details by the first bank for the first customer and the second bank for the second customer with a transaction timestamp by creating signatures for a current and an updated balance of the first customer and the second customer based on a transaction amount, wherein the updated balance is stored in the first private shared database of the first bank for the first customer and in the second private shared database of the second bank for the second customer, and wherein the signatures are created using pairing based cryptographic algorithms;
   iii) storing hashes and signatures of the current and the updated balance by the first bank for the first customer and the second bank for the second customer on a global ledger of the blockchain network, wherein the global ledger is accessible to the first bank, the second bank and the governing authority;

iv) creating (a) a proof of transaction by the first bank, by subtracting the updated balance from current balance of the first customer ($U_A - U'_A = T$), and (b) the proof of transaction by the second bank by subtracting the current balance from the updated balance for the second customer ($U'_B - U_B = T$); and

v) receiving the proof of transaction from the first bank and the second bank by the governing authority to verify correctness of the inter-bank transaction by comparing the received proof of transaction with the stored hashes, and signatures of the balances on the global ledger.

2. The method as claimed in claim 1, wherein:

performing (206b), by the subnetwork executed by the one or more hardware processors, the privacy enabled inter-bank settlements through the blockchain network on detecting the inter-bank settlement request between the first bank and the second bank comprises:

i) independently computing a sum of all credits transaction ($T_{AC}$ and $T_{BC}$) and debits transaction ($T_{AD}$ and $T_{BD}$) for end of predefined settlement cycle by the first bank and the second bank;

ii) creating the signatures ($\sigma_{T_{AD}-T_{AC}}$) for a proof of settlement by the first bank for verification by the second bank and the signatures ($\sigma_{T_{BD}-T_{BC}}$) for the proof of settlement by the second bank for verification by the first bank;

iii) verifying mutually by the first bank and the second bank, banks settlement using debits and credits against the proof of settlement received from each other;

iv) storing settlement details along with the proof of settlement on the common private shared database, accessible to the governing authority; and

v) storing the transaction on the global ledger for verifying by the governing authority.

3. A system (100) comprising:

a memory (102) storing instructions;

one or more Input/Output (I/O) interfaces (106); and

one or more hardware processors (104) coupled to the memory (102) via the one or more I/O interfaces (106), wherein the one or more hardware processors (104) are configured by the instructions to:

create by a blockchain network executed by one or more hardware processors (104), a plurality of subnetworks for bilateral transactions among a plurality of banks participating in the blockchain network via a plurality of nodes, wherein a subnetwork among the plurality of subnetwork comprises a first bank with a first private shared database and a second bank with a second private shared database, and a common private shared database among the first bank, the second bank and a governing authority present within the blockchain network, and wherein a bilateral transaction comprises at least one of: (a) an inter-bank transaction between a first customer of the first bank and a second customer of the second bank with privacy enabled auditing by the governing authority through the blockchain network, and (b) privacy enabled inter-bank settlements between the first bank and the second bank;

detect by the subnetwork executed by the one or more hardware processors (104), at least one of (a) initiation of a transaction request to transfer funds or payment from the first customer of the first bank with the second customer of the second bank and (b) an inter-bank settlement request between the first bank and the second bank; and

perform, by the subnetwork, the inter-bank transaction with privacy enabled auditing by the governing authority on detecting the initiation of the transaction request, wherein performing the inter-bank transaction comprises:

i) receiving a record of the transaction request to transfer funds or payment for the inter-bank transaction from the first customer of the first bank to the second customer of the second bank;

ii) recording transaction details by the first bank for the first customer and the second bank for the second customer with a transaction timestamp by creating signatures for a current and an updated balance of the first customer and the second customer based on a transaction amount, wherein the updated balance is stored in the first private shared database of the first bank for the first customer and in the second private shared database of the second bank for the second customer, and wherein the signatures are created using pairing based cryptographic algorithms;

iii) storing hashes and signatures of the current and the updated balance by the first bank for the first customer and the second bank for the second customer on a global ledger of the blockchain network, wherein the global ledger is accessible to the first bank, the second bank and the governing authority;

iv) creating (a) a proof of transaction by the first bank, by subtracting the updated balance from current balance of the first customer ($U_A$ - $U'_A$ = T), and (b) the proof of transaction by the second bank by subtracting the current balance from the updated balance for the second customer ($U'_B$ - $U_B$ = T); and
v) receiving the proof of transaction from the first bank and the second bank by the governing authority to verify correctness of the inter-bank transaction by comparing the received proof of transaction with the stored hashes, and signatures of the balances on the global ledger.

4. The system as claimed in claim 3 wherein performing by the subnetwork executed by the one or more hardware processors (104), the privacy enabled inter-bank settlements through the blockchain network on detecting the inter-bank settlement request between the first bank and the second bank comprises:

i) independently computing a sum of all credits transaction ($T_{AC}$ and $T_{BC}$) and debits transaction ($T_{AD}$ and $T_{BD}$) for end of predefined settlement cycle by the first bank and the second bank;
ii) creating the signatures ($\sigma_{T_{AD}-T_{AC}}$) for a proof of settlement by the first bank for verification by the second bank and the signatures ($\sigma_{T_{BD}-T_{BC}}$) for the proof of settlement by the second bank for verification by the first bank;
iii) verifying mutually by the first bank and the second bank, banks settlement using debits and credits against the proof of settlement received from each other;
iv) storing settlement details along with the proof of settlement on the common private shared database, accessible to the governing authority; and
v) storing the transaction on the global ledger for verifying by the governing authority.

5. One or more non-transitory machine-readable information storage mediums comprising one or more instructions which when executed by one or more hardware processors cause:

creating by a blockchain network a plurality of subnetworks for bilateral transactions among a plurality of banks participating in the blockchain network via a plurality of nodes, wherein a subnetwork among the plurality of subnetwork comprises a first bank with a first private shared database and a second bank with a second private shared database, and a common private shared database among the first bank, the second bank and a governing authority present within the blockchain network, and wherein a bilateral transaction comprises at least one of: (a) an inter-bank transaction between a first customer of the first bank and a second customer of the second bank with privacy enabled auditing by the governing authority through the blockchain network, and (b) privacy enabled inter-bank settlements between the first bank and the second bank;
detecting by the subnetwork, at least one of (a) initiation of a transaction request to transfer funds or payment from the first customer of the first bank with the second customer of the second bank and (b) an inter-bank settlement request between the first bank and the second bank; and
performing by the subnetwork the inter-bank transaction with privacy enabled auditing by the governing authority on detecting the initiation of the transaction request, wherein performing the inter-bank transaction comprises:

i) receiving a record of the transaction request to transfer funds or payment for the inter-bank transaction from the first customer of the first bank to the second customer of the second bank;
ii) recording transaction details by the first bank for the first customer and the second bank for the second customer with a transaction timestamp by creating signatures for a current and an updated balance of the first customer and the second customer based on a transaction amount, wherein the updated balance is stored in the first private shared database of the first bank for the first customer and in the second private shared database of the second bank for the second customer, and wherein the signatures are created using pairing based cryptographic algorithms;
iii) storing hashes and signatures of the current and the updated balance by the first bank for the first customer and the second bank for the second customer on a global ledger of the blockchain network, wherein the global ledger is accessible to the first bank, the second bank and the governing authority;
iv) creating (a) a proof of transaction by the first bank, by subtracting the updated balance from current balance of the first customer ($U_A$ - $U'_A$ = T), and (b) the proof of transaction by the second bank by subtracting the current balance from the updated balance for the second customer ($U'_B$ - $U_B$ = T); and
v) receiving the proof of transaction from the first bank and the second bank by the governing authority to verify correctness of the inter-bank transaction by comparing the received proof of transaction with the stored hashes, and signatures of the balances on the global ledger.

6. The one or more non-transitory machine-readable information storage mediums of claim 5, wherein:
performing by the subnetwork the privacy enabled inter-bank settlements through the blockchain network on detecting the inter-bank settlement request between the first bank and the second bank comprises:

i) independently computing a sum of all credits transaction ($T_{AC}$ and $T_{BC}$) and debits transaction ($T_{AD}$ and $T_{BD}$) for end of predefined settlement cycle by the first bank and the second bank;

ii) creating the signatures ($\sigma_{T_{AD}-T_{AC}}$) for a proof of settlement by the first bank for verification by the second bank and the signatures ($\sigma_{T_{BD}-T_{BC}}$) for the proof of settlement by the second bank for verification by the first bank;

iii) verifying mutually by the first bank and the second bank, banks settlement using debits and credits against the proof of settlement received from each other;

iv) storing settlement details along with the proof of settlement on the common private shared database, accessible to the governing authority; and

v) storing the transaction on the global ledger for verifying by the governing authority.

## Patentansprüche

1. Prozessorimplementiertes Verfahren (200), umfassend:

Erzeugen (202), durch ein Blockchain-Netzwerk, das durch einen oder mehrere Hardwareprozessoren ausgeführt wird, einer Mehrzahl von Teilnetzwerken für bilaterale Transaktionen unter einer Mehrzahl von Banken, die an dem Blockchain-Netzwerk teilnehmen, über eine Mehrzahl von Knoten, wobei ein Teilnetzwerk unter der Mehrzahl von Teilnetzwerken eine erste Bank mit einer ersten privaten gemeinsam genutzten Datenbank und eine zweite Bank mit einer zweiten privaten gemeinsam genutzten Datenbank und eine gemeinsame private gemeinsam genutzte Datenbank unter der ersten Bank, der zweiten Bank und einer Verwaltungsinstanz, die innerhalb des Blockchain-Netzwerks vorhanden ist, umfasst, und wobei eine bilaterale Transaktion mindestens eines von Folgendem umfasst: (a) eine bankübergreifende Transaktion zwischen einem ersten Kunden der ersten Bank und einem zweiten Kunden der zweiten Bank mit datenschutzfähiger Prüfung durch die Verwaltungsinstanz durch das Blockchain-Netzwerk und (b) datenschutzfähige bankübergreifende Abrechnungen zwischen der ersten Bank und der zweiten Bank;

Detektieren (204), durch das Teilnetzwerk, das durch den einen oder die mehreren Hardwareprozessoren ausgeführt wird, mindestens eines von (a) Initiierung einer Transaktionsanforderung zum Übertragen von Geldern oder einer Zahlung von dem ersten Kunden der ersten Bank zu dem zweiten Kunden der zweiten Bank und (b) einer bankübergreifenden Abrechnungsanforderung zwischen der ersten Bank und der zweiten Bank; und

Durchführen (206a), durch das Teilnetzwerk, das durch den einen oder die mehreren Hardwareprozessoren ausgeführt wird, der bankübergreifenden Transaktion mit datenschutzfähiger Prüfung durch die Verwaltungsinstanz beim Detektieren der Initiierung der Transaktionsanforderung, wobei das Durchführen der bankübergreifenden Transaktion Folgendes umfasst:

i) Empfangen einer Aufzeichnung der Transaktionsanforderung zum Übertragen von Geldern oder einer Zahlung für die bankübergreifende Transaktion von dem ersten Kunden der ersten Bank zu dem zweiten Kunden der zweiten Bank;

ii) Aufzeichnen von Transaktionsdetails durch die erste Bank für den ersten Kunden und die zweite Bank für den zweiten Kunden mit einem Transaktionszeitstempel durch Erzeugen von Signaturen für einen aktuellen und einen aktualisierten Saldo des ersten Kunden und des zweiten Kunden basierend auf einem Transaktionsbetrag, wobei der aktualisierte Saldo in der ersten privaten gemeinsam genutzten Datenbank der ersten Bank für den ersten Kunden und in der zweiten privaten gemeinsam genutzten Datenbank der zweiten Bank für den zweiten Kunden gespeichert wird, und wobei die Signaturen unter Verwendung von paarungsbasierten kryptografischen Algorithmen erzeugt werden;

iii) Speichern von Hashes und Signaturen des aktuellen und des aktualisierten Saldos durch die erste Bank für den ersten Kunden und die zweite Bank für den zweiten Kunden in einem globalen Hauptbuch des Blockchain-Netzwerks, wobei das globale Hauptbuch für die erste Bank, die zweite Bank und die Verwaltungsinstanz zugänglich ist;

iv) Erzeugen (a) eines Transaktionsnachweises durch die erste Bank durch Subtrahieren des aktualisierten Saldos von dem aktuellen Saldo des ersten Kunden ($U_A - U'_A = T$) und (b) des Transaktionsnachweises durch die zweite Bank durch Subtrahieren des aktuellen Saldos von dem aktualisierten Saldo für den zweiten Kunden ($U'_B - U_B = T$); und

v) Empfangen des Transaktionsnachweises von der ersten Bank und der zweiten Bank durch die Verwaltungsinstanz, um die Richtigkeit der bankübergreifenden Transaktion durch Vergleichen des empfangenen Transaktionsnachweises mit den gespeicherten Hashes und Signaturen der Saldos in dem globalen Hauptbuch zu verifizieren.

2. Verfahren nach Anspruch 1, wobei:

das Durchführen (206b), durch das Teilnetzwerk, das durch den einen oder die mehreren Hardwareprozessoren ausgeführt wird, der datenschutzfähigen bankübergreifenden Abrechnungen durch das Blockchain-Netzwerk beim Detektieren der bankübergreifenden Abrechnungsanforderung zwischen der ersten Bank und der zweiten Bank Folgendes umfasst:

i) unabhängiges Berechnen einer Summe aller Kredittransaktionen ($T_{AC}$ und $T_{BC}$) und Abbuchungstransaktionen ($T_{AD}$ und $T_{BD}$) für das Ende eines vordefinierten Abrechnungszyklus durch die erste Bank und die zweite Bank;
ii) Erzeugen der Signaturen ($\sigma_{T_{AD}\text{-}T_{AC}}$) für einen Abrechnungsnachweis durch die erste Bank zur Verifizierung durch die zweite Bank und der Signaturen ($\sigma_{T_{BD}\text{-}T_{BC}}$) für den Abrechnungsnachweis durch die zweite Bank zur Verifizierung durch die erste Bank;
iii) gegenseitiges Verifizieren, durch die erste Bank und die zweite Bank, der Bankabrechnung unter Verwendung von Abbuchungen und Krediten gegen den Abrechnungsnachweis, die voneinander empfangen werden;
iv) Speichern von Abrechnungsdetails zusammen mit dem Abrechnungsnachweis in der gemeinsamen privaten gemeinsam genutzten Datenbank, die für die Verwaltungsinstanz zugänglich ist; und
v) Speichern der Transaktion in dem globalen Hauptbuch zur Verifizierung durch die Verwaltungsinstanz.

3. System (100), umfassend:

einen Speicher (102), der Anweisungen speichert;
eine oder mehrere Eingabe/Ausgabe(E/A)-Schnittstellen (106); und
einen oder mehrere Hardwareprozessoren (104), die über die eine oder die mehreren E/A-Schnittstellen (106) mit dem Speicher (102) gekoppelt sind, wobei der eine oder die mehreren Hardwareprozessoren (104) durch die Anweisungen konfiguriert sind zum:

Erzeugen, durch ein Blockchain-Netzwerk, das durch einen oder mehrere Hardwareprozessoren (104) ausgeführt wird, einer Mehrzahl von Teilnetzwerken für bilaterale Transaktionen unter einer Mehrzahl von Banken, die an dem Blockchain-Netzwerk teilnehmen, über eine Mehrzahl von Knoten, wobei ein Teilnetzwerk unter der Mehrzahl von Teilnetzwerken eine erste Bank mit einer ersten privaten gemeinsam genutzten Datenbank und eine zweite Bank mit einer zweiten privaten gemeinsam genutzten Datenbank und eine gemeinsame private gemeinsam genutzte Datenbank unter der ersten Bank, der zweiten Bank und einer Verwaltungsinstanz, die innerhalb des Blockchain-Netzwerks vorhanden ist, umfasst, und wobei eine bilaterale Transaktion mindestens eines von Folgendem umfasst: (a) eine bankübergreifende Transaktion zwischen einem ersten Kunden der ersten Bank und einem zweiten Kunden der zweiten Bank mit datenschutzfähiger Prüfung durch die Verwaltungsinstanz durch das Blockchain-Netzwerk und (b) datenschutzfähige bankübergreifende Abrechnungen zwischen der ersten Bank und der zweiten Bank;
Detektieren, durch das Teilnetzwerk, das durch den einen oder die mehreren Hardwareprozessoren (104) ausgeführt wird, mindestens eines von (a) Initiierung einer Transaktionsanforderung zum Übertragen von Geldern oder einer Zahlung von dem ersten Kunden der ersten Bank zu dem zweiten Kunden der zweiten Bank und (b) einer bankübergreifenden Abrechnungsanforderung zwischen der ersten Bank und der zweiten Bank; und
Durchführen, durch das Teilnetzwerk, der bankübergreifenden Transaktion mit datenschutzfähiger Prüfung durch die Verwaltungsinstanz beim Detektieren der Initiierung der Transaktionsanforderung, wobei das Durchführen der bankübergreifenden Transaktion Folgendes umfasst:

i) Empfangen einer Aufzeichnung der Transaktionsanforderung zum Übertragen von Geldern oder einer Zahlung für die bankübergreifende Transaktion von dem ersten Kunden der ersten Bank zu dem zweiten Kunden der zweiten Bank;
ii) Aufzeichnen von Transaktionsdetails durch die erste Bank für den ersten Kunden und die zweite Bank für den zweiten Kunden mit einem Transaktionszeitstempel durch Erzeugen von Signaturen für einen aktuellen und einen aktualisierten Saldo des ersten Kunden und des zweiten Kunden basierend auf einem Transaktionsbetrag, wobei der aktualisierte Saldo in der ersten privaten gemeinsam genutzten Datenbank der ersten Bank für den ersten Kunden und in der zweiten privaten gemeinsam genutzten Datenbank der zweiten Bank für den zweiten Kunden gespeichert wird, und wobei die Signaturen unter Verwendung von paarungsbasierten kryptografischen Algorithmen erzeugt werden;

iii) Speichern von Hashes und Signaturen des aktuellen und des aktualisierten Saldos durch die erste Bank für den ersten Kunden und die zweite Bank für den zweiten Kunden in einem globalen Hauptbuch des Blockchain-Netzwerks, wobei das globale Hauptbuch für die erste Bank, die zweite Bank und die Verwaltungsinstanz zugänglich ist;

iv) Erzeugen (a) eines Transaktionsnachweises durch die erste Bank durch Subtrahieren des aktualisierten Saldos von dem aktuellen Saldo des ersten Kunden ($U_A - U'_A = T$) und (b) des Transaktionsnachweises durch die zweite Bank durch Subtrahieren des aktuellen Saldos von dem aktualisierten Saldo für den zweiten Kunden ($U'_B - U_B = T$); und

v) Empfangen des Transaktionsnachweises von der ersten Bank und der zweiten Bank durch die Verwaltungsinstanz, um die Richtigkeit der bankübergreifenden Transaktion durch Vergleichen des empfangenen Transaktionsnachweises mit den gespeicherten Hashes und Signaturen der Saldos in dem globalen Hauptbuch zu verifizieren.

4. System nach Anspruch 3, wobei das Durchführen, durch das Teilnetzwerk, das durch den einen oder die mehreren Hardwareprozessoren (104) ausgeführt wird, der datenschutzfähigen bankübergreifenden Abrechnungen durch das Blockchain-Netzwerk beim Detektieren der bankübergreifenden Abrechnungsanforderung zwischen der ersten Bank und der zweiten Bank Folgendes umfasst:

i) unabhängiges Berechnen einer Summe aller Kredittransaktionen ($T_{AC}$ und $T_{BC}$) und Abbuchungstransaktionen ($T_{AD}$ und $T_{BD}$) für das Ende eines vordefinierten Abrechnungszyklus durch die erste Bank und die zweite Bank;

ii) Erzeugen der Signaturen ($\sigma_{T_{AD}-T_{AC}}$) für einen Abrechnungsnachweis durch die erste Bank zur Verifizierung durch die zweite Bank und der Signaturen ($\sigma_{T_{BD}-T_{BC}}$) für den Abrechnungsnachweis durch die zweite Bank zur Verifizierung durch die erste Bank;

iii) gegenseitiges Verifizieren, durch die erste Bank und die zweite Bank, der Bankabrechnung unter Verwendung von Abbuchungen und Krediten gegen den Abrechnungsnachweis, die voneinander empfangen werden;

iv) Speichern von Abrechnungsdetails zusammen mit dem Abrechnungsnachweis in der gemeinsamen privaten gemeinsam genutzten Datenbank, die für die Verwaltungsinstanz zugänglich ist; und

v) Speichern der Transaktion in dem globalen Hauptbuch zur Verifizierung durch die Verwaltungsinstanz.

5. Ein oder mehrere nichtflüchtige maschinenlesbare Informationsspeichermedien, die eine oder mehrere Anweisungen umfassen, die, wenn sie durch einen oder mehrere Hardwareprozessoren ausgeführt werden, Folgendes bewirken:

Erzeugen, durch ein Blockchain-Netzwerk, einer Mehrzahl von Teilnetzwerken für bilaterale Transaktionen unter einer Mehrzahl von Banken, die an dem Blockchain-Netzwerk teilnehmen, über eine Mehrzahl von Knoten, wobei ein Teilnetzwerk unter der Mehrzahl von Teilnetzwerken eine erste Bank mit einer ersten privaten gemeinsam genutzten Datenbank und eine zweite Bank mit einer zweiten privaten gemeinsam genutzten Datenbank und eine gemeinsame private gemeinsam genutzte Datenbank unter der ersten Bank, der zweiten Bank und einer Verwaltungsinstanz, die innerhalb des Blockchain-Netzwerks vorhanden ist, umfasst, und wobei eine bilaterale Transaktion mindestens eines von Folgendem umfasst: (a) eine bankübergreifende Transaktion zwischen einem ersten Kunden der ersten Bank und einem zweiten Kunden der zweiten Bank mit datenschutzfähiger Prüfung durch die Verwaltungsinstanz durch das Blockchain-Netzwerk und (b) datenschutzfähige bankübergreifende Abrechnungen zwischen der ersten Bank und der zweiten Bank;

Detektieren, durch das Teilnetzwerk, mindestens eines von (a) Initiierung einer Transaktionsanforderung zum Übertragen von Geldern oder einer Zahlung von dem ersten Kunden der ersten Bank zu dem zweiten Kunden der zweiten Bank und (b) einer bankübergreifenden Abrechnungsanforderung zwischen der ersten Bank und der zweiten Bank; und

Durchführen, durch das Teilnetzwerk, der bankübergreifenden Transaktion mit datenschutzfähiger Prüfung durch die Verwaltungsinstanz beim Detektieren der Initiierung der Transaktionsanforderung, wobei das Durchführen der bankübergreifenden Transaktion Folgendes umfasst:

i) Empfangen einer Aufzeichnung der Transaktionsanforderung zum Übertragen von Geldern oder einer Zahlung für die bankübergreifende Transaktion von dem ersten Kunden der ersten Bank zu dem zweiten Kunden der zweiten Bank;

ii) Aufzeichnen von Transaktionsdetails durch die erste Bank für den ersten Kunden und die zweite Bank für den zweiten Kunden mit einem Transaktionszeitstempel durch Erzeugen von Signaturen für einen aktuellen und einen aktualisierten Saldo des ersten Kunden und des zweiten Kunden basierend auf einem Transaktionsbetrag, wobei der aktualisierte Saldo in der ersten privaten gemeinsam genutzten Datenbank der ersten Bank für den ersten Kunden und in der zweiten privaten gemeinsam genutzten Datenbank der zweiten Bank für den zweiten Kunden gespeichert wird, und wobei die Signaturen unter Verwendung von paarungsbasierten kryptografischen Algorithmen erzeugt werden;

iii) Speichern von Hashes und Signaturen des aktuellen und des aktualisierten Saldos durch die erste Bank für den ersten Kunden und die zweite Bank für den zweiten Kunden in einem globalen Hauptbuch des Blockchain-Netzwerks, wobei das globale Hauptbuch für die erste Bank, die zweite Bank und die Verwaltungsinstanz zugänglich ist;

iv) Erzeugen (a) eines Transaktionsnachweises durch die erste Bank durch Subtrahieren des aktualisierten Saldos von dem aktuellen Saldo des ersten Kunden ($U_A - U'_A = T$) und (b) des Transaktionsnachweises durch die zweite Bank durch Subtrahieren des aktuellen Saldos von dem aktualisierten Saldo für den zweiten Kunden ($U'_B - U_B = T$); und

v) Empfangen des Transaktionsnachweises von der ersten Bank und der zweiten Bank durch die Verwaltungsinstanz, um die Richtigkeit der bankübergreifenden Transaktion durch Vergleichen des empfangenen Transaktionsnachweises mit den gespeicherten Hashes und Signaturen der Saldos in dem globalen Hauptbuch zu verifizieren.

6. Ein oder mehrere nichtflüchtige maschinenlesbare Informationsspeichermedien nach Anspruch 5, wobei:

das Durchführen, durch das Teilnetzwerk, der datenschutzfähigen bankübergreifenden Abrechnungen durch das Blockchain-Netzwerk beim Detektieren der bankübergreifenden Abrechnungsanforderung zwischen der ersten Bank und der zweiten Bank Folgendes umfasst:

i) unabhängiges Berechnen einer Summe aller Kredittransaktionen ($T_{AC}$ und $T_{BC}$) und Abbuchungstransaktionen ($T_{AD}$ und $T_{BD}$) für das Ende eines vordefinierten Abrechnungszyklus durch die erste Bank und die zweite Bank;

ii) Erzeugen der Signaturen ($\sigma_{T_{AD}-T_{AC}}$) für einen Abrechnungsnachweis durch die erste Bank zur Verifizierung durch die zweite Bank und der Signaturen ($\sigma_{T_{BD}-T_{BC}}$) für den Abrechnungsnachweis durch die zweite Bank zur Verifizierung durch die erste Bank;

iii) gegenseitiges Verifizieren, durch die erste Bank und die zweite Bank, der Bankabrechnung unter Verwendung von Abbuchungen und Krediten gegen den Abrechnungsnachweis, die voneinander empfangen werden;

iv) Speichern von Abrechnungsdetails zusammen mit dem Abrechnungsnachweis in der gemeinsamen privaten gemeinsam genutzten Datenbank, die für die Verwaltungsinstanz zugänglich ist; und

v) Speichern der Transaktion in dem globalen Hauptbuch zur Verifizierung durch die Verwaltungsinstanz.

## Revendications

1. Procédé mis en oeuvre par processeur (200) comprenant :

la création (202), par un réseau de blockchain exécuté par un ou plusieurs processeurs matériels, d'une pluralité de sous-réseaux pour des transactions bilatérales parmi une pluralité de banques participant au réseau de blockchain via une pluralité de noeuds, dans lequel un sous-réseau parmi la pluralité de sous-réseaux comprend une première banque avec une première base de données partagée privée et une seconde banque avec une seconde base de données partagée privée, et une base de données partagée privée commune parmi la première banque, la seconde banque et une autorité de direction présente dans le réseau de blockchain, et dans lequel une transaction bilatérale comprend au moins l'un parmi : (a) une transaction interbancaire entre un premier client de la première banque et un second client de la seconde banque avec un audit activé par confidentialité effectué par l'autorité de direction à travers le réseau de blockchain, et (b) des règlements interbancaires activés par la confidentialité entre la première banque et la seconde banque

la détection (204), par le sous-réseau exécuté par les un ou plusieurs processeurs matériels, d'au moins l'un parmi (a) le lancement d'une demande de transaction pour transférer des fonds ou effectuer un paiement du premier client de la première banque au second client de la seconde banque et (b) une demande de règlement interbancaire entre la première banque et la seconde banque ; et

l'exécution (206a), par le sous-réseau exécuté par les un ou plusieurs processeurs matériels, de la transaction interbancaire avec un audit activé par confidentialité par l'autorité de direction lors de la détection du lancement de la demande de transaction, dans lequel l'exécution de la transaction interbancaire comprend :

i) la réception d'un enregistrement de la demande de transaction pour transférer des fonds ou effectuer un paiement pour la transaction interbancaire du premier client de la première banque au second client de la seconde banque ;

ii) l'enregistrement de détails de transaction par la première banque pour le premier client et la seconde banque pour le second client avec un horodatage de transaction en créant des signatures pour un solde actuel et un solde mis à jour du premier client et du second client sur la base d'un montant de transaction, dans lequel le solde mis à jour est stocké dans la première base de données partagée privée de la première banque pour le premier client et dans la seconde base de données partagée privée de la seconde banque pour le second client, et dans lequel les signatures sont créées en utilisant des algorithmes cryptographiques basés sur l'appariement ;

iii) le stockage d'empreintes et de signatures du solde actuel et du solde mis à jour par la première banque pour le premier client et la seconde banque pour le second client dans un registre mondial du réseau blockchain, dans lequel le registre mondial est accessible à la première banque, la seconde banque et l'autorité de direction ;

iv) la création (a) d'une preuve de transaction par la première banque, en soustrayant le solde mis à jour du solde actuel du premier client ($U_A$ - $U'_A$ = T), et (b) de la preuve de transaction par la seconde banque en soustrayant le solde actuel du solde mis à jour pour le second client ($U'_B$ - $U_B$ = T) ; et

v) la réception de la preuve de transaction de la première banque et de la seconde banque par l'autorité de direction pour vérifier l'exactitude de la transaction interbancaire en comparant la preuve de transaction reçue avec les empreintes et les signatures des soldes stockés dans le registre mondial.

**2.** Procédé selon la revendication 1, dans lequel :

l'exécution (206b), par le sous-réseau exécuté par les un ou plusieurs processeurs matériels, des règlements interbancaires activés par la confidentialité par l'intermédiaire du réseau blockchain lors de la détection de la demande de règlement interbancaire entre la première banque et la seconde banque comprend :

i) le calcul indépendant d'une somme de toutes les transactions de crédits ($T_{AC}$ et $T_{BC}$) et transactions de débits ($T_{AD}$ et $T_{BD}$) pour la fin d'un cycle de règlement prédéfini par la première banque et la seconde banque ;

ii) la création des signatures ($\sigma_{T_{AD}-T_{AC}}$) pour une preuve de règlement par la première banque pour vérification par la seconde banque et des signatures ($\sigma_{T_{BD}-T_{BC}}$) pour la preuve de règlement par la seconde banque pour vérification par la première banque ;

iii) la vérification mutuelle par la première banque et la seconde banque, du règlement des banques en utilisant des débits et des crédits par rapport à la preuve de règlement reçue l'un de l'autre ;

iv) le stockage de détails de règlement avec la preuve de règlement sur la base de données partagée privée commune, accessible à l'autorité de direction ; et

v) le stockage de la transaction sur le registre mondial pour vérification par l'autorité de direction.

**3.** Système (100) comprenant :

une mémoire (102) stockant des instructions ;
une ou plusieurs interfaces d'entrée/sortie (E/S) (106) ; et
un ou plusieurs processeurs matériels (104) couplés à la mémoire (102) via les une ou plusieurs interfaces E/S (106), dans lequel les un ou plusieurs processeurs matériels (104) sont configurés par les instructions pour :

la création, par un réseau de blockchain exécuté par un ou plusieurs processeurs matériels (104), d'une pluralité de sous-réseaux pour des transactions bilatérales parmi une pluralité de banques participant au réseau de blockchain via une pluralité de noeuds, dans lequel un sous-réseau parmi la pluralité de sous-réseaux comprend une première banque avec une première base de données partagée privée et une seconde banque avec une seconde base de données partagée privée, et une base de données partagée privée commune parmi la première banque, la seconde banque et une autorité de direction présente dans le réseau de blockchain, et dans lequel une transaction bilatérale comprend au moins l'un parmi : (a) une transaction interbancaire entre un premier client de la première banque et un second client de la seconde banque avec un audit activé par confidentialité effectué par l'autorité de direction à travers le réseau de blockchain, et (b) des règlements interbancaires activés par la confidentialité entre la première banque et la seconde banque ;

la détection, par le sous-réseau exécuté par les un ou plusieurs processeurs matériels (104), d'au moins l'un parmi (a) le lancement d'une demande de transaction pour transférer des fonds ou effectuer un paiement du premier client de la première banque au second client de la seconde banque et (b) une demande de règlement interbancaire entre la première banque et la seconde banque ; et

l'exécution, par le sous-réseau, de la transaction interbancaire avec un audit activé par confidentialité par l'autorité de direction lors de la détection du lancement de la demande de transaction, dans lequel l'exécution de la transaction interbancaire comprend :

i) la réception d'un enregistrement de la demande de transaction pour transférer des fonds ou effectuer un paiement pour la transaction interbancaire du premier client de la première banque au second client de la seconde banque ;

ii) l'enregistrement de détails de transaction par la première banque pour le premier client et la seconde banque pour le second client avec un horodatage de transaction en créant des signatures pour un solde actuel et un solde mis à jour du premier client et du second client sur la base d'un montant de transaction, dans lequel le solde mis à jour est stocké dans la première base de données partagée privée de la première banque pour le premier client et dans la seconde base de données partagée privée de la seconde banque pour le second client, et dans lequel les signatures sont créées en utilisant des algorithmes cryptographiques basés sur l'appariement ;

iii) le stockage d'empreintes et de signatures du solde actuel et du solde mis à jour par la première banque pour le premier client et la seconde banque pour le second client dans un registre mondial du réseau blockchain, dans lequel le registre mondial est accessible à la première banque, la seconde banque et l'autorité de direction ;

iv) la création (a) d'une preuve de transaction par la première banque, en soustrayant le solde mis à jour du solde actuel du premier client ($U_A$ - $U'_A$ = T), et (b) de la preuve de transaction par la seconde banque en soustrayant le solde actuel du solde mis à jour pour le second client ($U'_B$ - $U_B$ = $T$) ; et

v) la réception de la preuve de transaction de la première banque et de la seconde banque par l'autorité de direction pour vérifier l'exactitude de la transaction interbancaire en comparant la preuve de transaction reçue avec les empreintes et les signatures des soldes stockés dans le registre mondial.

4. Système selon la revendication 3, dans lequel l'exécution par le sous-réseau exécuté par les un ou plusieurs processeurs matériels (104), des règlements interbancaires activés par la confidentialité par l'intermédiaire du réseau blockchain lors de la détection de la demande de règlement interbancaire entre la première banque et la seconde banque comprend :

i) le calcul indépendant d'une somme de toutes les transactions de crédits ($T_{AC}$ et $T_{BC}$) et transactions de débits ($T_{AD}$ et $T_{BD}$) pour la fin d'un cycle de règlement prédéfini par la première banque et la seconde banque ;

ii) la création des signatures ($\sigma_{T_{AD}-T_{AC}}$) pour une preuve de règlement par la première banque pour vérification par la seconde banque et des signatures ($\sigma_{T_{BD}-T_{BC}}$) pour la preuve de règlement par la seconde banque pour vérification par la première banque ;

iii) la vérification mutuelle par la première banque et la seconde banque, du règlement des banques en utilisant des débits et des crédits par rapport à la preuve de règlement reçue l'un de l'autre ;

iv) le stockage de détails de règlement avec la preuve de règlement sur la base de données partagée privée commune, accessible à l'autorité de direction ; et

v) le stockage de la transaction sur le registre mondial pour vérification par l'autorité de direction.

5. Un ou plusieurs supports de stockage d'informations lisibles par machine non transitoires comprenant une ou plusieurs instructions qui, lorsqu'elles sont exécutées par un ou plusieurs processeurs matériels, amènent :

la création, par un réseau de blockchain, d'une pluralité de sous-réseaux pour des transactions bilatérales parmi une pluralité de banques participant au réseau de blockchain via une pluralité de noeuds, dans lequel un sous-réseau parmi la pluralité de sous-réseaux comprend une première banque avec une première base de données partagée privée et une seconde banque avec une seconde base de données partagée privée, et une base de données partagée privée commune parmi la première banque, la seconde banque et une autorité de direction présente dans le réseau de blockchain, et dans lequel une transaction bilatérale comprend au moins l'un parmi : (a) une transaction interbancaire entre un premier client de la première banque et un second client de la seconde banque avec un audit activé par confidentialité effectué par l'autorité de direction à travers le réseau de blockchain, et (b) des règlements interbancaires activés par la confidentialité entre la première banque et la seconde banque ;

la détection, par le sous-réseau, d'au moins l'un parmi (a) le lancement d'une demande de transaction pour transférer des fonds ou effectuer un paiement du premier client de la première banque au second client de la seconde banque et (b) une demande de règlement interbancaire entre la première banque et la seconde banque ; et

l'exécution, par le sous-réseau, de la transaction interbancaire avec un audit activé par confidentialité par l'autorité de direction lors de la détection du lancement de la demande de transaction, dans lequel l'exécution de la transaction interbancaire comprend :

i) la réception d'un enregistrement de la demande de transaction pour transférer des fonds ou effectuer un paiement pour la transaction interbancaire du premier client de la première banque au second client de la seconde banque ;

ii) l'enregistrement de détails de transaction par la première banque pour le premier client et la seconde banque pour le second client avec un horodatage de transaction en créant des signatures pour un solde actuel et un solde mis à jour du premier client et du second client sur la base d'un montant de transaction, dans lequel le solde mis à jour est stocké dans la première base de données partagée privée de la première banque pour le premier client et dans la seconde base de données partagée privée de la seconde banque pour le second client, et dans lequel les signatures sont créées en utilisant des algorithmes cryptographiques basés sur l'appariement ;

iii) le stockage d'empreintes et de signatures du solde actuel et du solde mis à jour par la première banque pour le premier client et la seconde banque pour le second client dans un registre mondial du réseau blockchain, dans lequel le registre mondial est accessible à la première banque, la seconde banque et l'autorité de direction ;

iv) la création (a) d'une preuve de transaction par la première banque, en soustrayant le solde mis à jour du solde actuel du premier client ($U_A - U'_A = T$), et (b) de la preuve de transaction par la seconde banque en soustrayant le solde actuel du solde mis à jour pour le second client ($U'_B - U_B = T$) ; et

v) la réception de la preuve de transaction de la première banque et de la seconde banque par l'autorité de direction pour vérifier l'exactitude de la transaction interbancaire en comparant la preuve de transaction reçue avec les empreintes et les signatures des soldes stockés dans le registre mondial.

6. Un ou plusieurs supports de stockage d'informations lisibles par machine non transitoires selon la revendication 5, dans lesquels :

l'exécution par le sous-réseau des règlements interbancaires activés par la confidentialité par l'intermédiaire du réseau blockchain lors de la détection de la demande de règlement interbancaire entre la première banque et la seconde banque comprend :

i) le calcul indépendant d'une somme de toutes les transactions de crédits ($T_{AC}$ et $T_{BC}$) et transactions de débits ($T_{AD}$ et $T_{BD}$) pour la fin d'un cycle de règlement prédéfini par la première banque et la seconde banque ;

ii) la création des signatures ($\sigma_{T_{AD}-T_{AC}}$) pour une preuve de règlement par la première banque pour vérification par la seconde banque et des signatures ($\sigma_{T_{BD}-T_{BC}}$) pour la preuve de règlement par la seconde banque pour vérification par la première banque ;

iii) la vérification mutuelle par la première banque et la seconde banque, du règlement des banques en utilisant des débits et des crédits par rapport à la preuve de règlement reçue l'un de l'autre ;

iv) le stockage de détails de règlement avec la preuve de règlement sur la base de données partagée privée commune, accessible à l'autorité de direction ; et

v) le stockage de la transaction sur le registre mondial pour vérification par l'autorité de direction.

FIG. 1A

## Problem: Transaction Completeness

$C_A$: $U_A$

$C_B$: $U_B$

$$t_1 : C_A \xrightarrow{T} C_B$$

**Bank A**

**Bank B**

$C_A$: $U_A'$

$C_B$: $U_B'$

$$t1 : U_A - U_A' = T = U_B' - U_B$$

Payment amount - to be verified by governing authority
without revealing customer balance details

FIG. 1B

FIG. 1C

EP 4 432 190 B1

200

creating, by a block chain network a plurality of subnetworks for bilateral transactions among a plurality of banks participating in the blockchain network via a plurality of nodes, wherein a subnetwork among the plurality of subnetwork comprises a pair of banks with a first bank and a second bank, wherein the subnetwork comprises (a) a first private shared database for a first bank, (b) a second private shared database for a second bank, and (c) a common private shared database among the first bank, the second bank and a governing authority of the plurality of banks present within the blockchain network

202

detecting by the subnetwork at least one of: (a) initiation of a payment transaction from the first customer of the first bank with the second customer of the second bank and (b) an inter-bank settlement request between the first bank and the second bank

204

performing by the subnetwork the inter-bank transaction with privacy enabled auditing by the governing authority on detecting the initiation of the payment

206a

performing by the subnetwork the inter-bank transaction with privacy enabled auditing by the governing authority on detecting the initiation of the payment

206b

FIG. 2

FIG. 3

$$C_A: U_A \qquad\qquad C_B: U_B$$

$$t_1 : C_A \xrightarrow{T} C_B$$

Bank A — Bank B

$$U_A - U'_A = T \qquad\qquad U'_B - U_B = T$$

Signed by Bank A — Signed by Bank B

$$\sigma(\mathbf{U_A}) = (\mathbf{H}(\mathbf{U_A}\|\mathbf{ts}).\mathbf{u}_{\mathbf{A}}^{(\mathbf{U_A}\|\mathbf{ts})})^{\alpha_{\mathbf{A}}} \qquad \sigma(\mathbf{U'_B}) = (\mathbf{H}(\mathbf{U'_B}\|\mathbf{ts}).\mathbf{u}_{\mathbf{B}}^{(\mathbf{U'_B}\|\mathbf{ts})})^{\alpha_{\mathbf{B}}}$$

$$\sigma(-\mathbf{U'_A}) = (\mathbf{H}(-\mathbf{U'_A}\|\mathbf{ts}).\mathbf{u}_{\mathbf{A}}^{(-\mathbf{U'_A}\|\mathbf{ts})})^{\alpha_{\mathbf{A}}} \qquad \sigma(-\mathbf{U_B}) = (\mathbf{H}(-\mathbf{U_B}\|\mathbf{ts}).\mathbf{u}_{\mathbf{B}}^{(-\mathbf{U_B}\|\mathbf{ts})})^{\alpha_{\mathbf{B}}}$$

$$\mathbf{H}(\mathbf{U_A}\|\mathbf{ts}), \ \mathbf{H}(-\mathbf{U'_A}\|\mathbf{ts}) \qquad\qquad \mathbf{H}(-\mathbf{U_B}\|\mathbf{ts}), \ \mathbf{H}(\mathbf{U'_B}\|\mathbf{ts})$$

FIG. 4A

$$C_A: U_A \qquad\qquad C_B: U_B$$

Bank A

Bank B

Bank A creates a proof for transaction

$$\mu_{\mathbf{A}} = (\mathbf{U_A}\|\mathrm{ts}) - (\mathbf{U_A'}\|\mathrm{ts})$$

Bank B creates a proof for transaction

$$\mu_{\mathbf{B}} = (\mathbf{U_B'}\|\mathrm{ts}) - (\mathbf{U_B}\|\mathrm{ts})$$

Regulatory authority receives verifiable proofs from Bank A and Bank B to audit the correctness of transaction

$$\mathrm{e}(\sigma_{\mathbf{A}}, \mathbf{g_A}) \overset{?}{=} \mathrm{e}(\mathbf{H}(\mathbf{U_A}\|\mathrm{ts}).\mathbf{H}(-\mathbf{U_A'}\|\mathrm{ts}).\mathbf{u_A^{\mu_A}}, \mathbf{v_A}) \qquad \mathrm{e}(\sigma_{\mathbf{B}}, \mathbf{g_B}) \overset{?}{=} \mathrm{e}(\mathbf{H}(\mathbf{U_B'}\|\mathrm{ts}).\mathbf{H}(-\mathbf{U_B}\|\mathrm{ts}).\mathbf{u_B^{\mu_B}}, \mathbf{v_B})$$

FIG. 4B

Bank A

Bank B

Bank A and Bank B generates authenticators for net settlement for the day independently and share with the counterpart : Net Settlement = Total Debits − Total Credits

$$\sigma_{T_{AD}-T_{AC}} = (H(T_{AD}).u_A^{T_{AD}}.H(-T_{AC}).u_A^{-T_{AC}})^{\alpha_A} \qquad \sigma_{T_{BD}-T_{BC}} = (H(T_{BD}).u_B^{T_{BD}}.H(-T_{BC}).u_B^{-T_{BC}})^{\alpha_B}$$

Settlement Verification at Bank A

Settlement Verification at Bank B

$$e(\sigma_{T_{AD}-T_{AC}}, g) \overset{?}{=} e(H(T_{BC}).u_A^{T_{BC}} * H(-T_{BD}).u_A^{-T_{BD}}, v_A) \qquad e(\sigma_{T_{BD}-T_{BC}}, g) \overset{?}{=} e(H(T_{AC}).u_B^{T_{AC}} * H(-T_{AD}).u_B^{-T_{AD}}, v_B)$$

**FIG. 5**

EP 4 432 190 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321016945

- US 2018025435 A1

**Non-patent literature cited in the description**

- Blockchain Enabled Privacy Preserving Data Audit. **PRABAL BANERJEE et al.** ARXIV.ORG. CORNELL UNIVERSITY LIBRARY, 201 OLIN LIBRARY CORNELL UNIVERSITY, 28 April 2019